# EUROPÄISCHE PATENTSCHRIFT

(11) **EP 3 833 585 B1**
(45) Veröffentlichungstag und Bekanntmachung des Hinweises auf die Patenterteilung: **07.09.2022**
(21) Anmeldenummer: 19749668.0
(22) Anmeldetag: 29.07.2019
(51) Int. Cl.: B60T 13/58

(54) **BREMSSYSTEM FÜR EIN KRAFTFAHRZEUG**
BRAKE SYSTEM FOR A VEHICLE
SYSTÈME DE FREIN POUR VÉHICULE

(30) Priorität: 08.08.2018 DE 102018213284
(43) Veröffentlichungstag der Anmeldung: 16.06.2021
(73) Patentinhaber: Continental Automotive Technologies GmbH, 30165 Hannover (DE)
(72) Erfinder: BRENN, Martin, 60488 Frankfurt am Main (DE); BÜCHLER, Roman, 60488 Frankfurt am Main (DE); HEISE, Andreas, 60488 Frankfurt am Main (DE)
(74) Vertreter: Continental Corporation
(86) Internationale Anmeldenummer: PCT/EP2019/070307
(87) Internationale Veröffentlichungsnummer: WO 2020/030458

(56) Entgegenhaltungen:
- EP-A1- 1 352 798
- WO-A1-99/38738
- WO-A1-2013/140221
- DE-A1-102006 055 766
- DE-A1-102009 016 638
- US-A1- 2012 068 529
- US-A1- 2016 032 995
- US-A1- 2018 154 875

## Beschreibung

Die Erfindung betrifft ein Bremssystem für ein Kraftfahrzeug, welches eine Anzahl von Rädern aufweist.

Kraftfahrzeuge sind typischerweise mit Bremssystemen ausgestattet, welche auf Räder des Kraftfahrzeugs wirken. Typische Personenkraftwagen haben beispielsweise vier Räder, welche alle mit einer Betriebsbremse bremsbar sind. Zusätzlich weisen die Kraftfahrzeuge typischerweise Parkbremsen auf, welche ein Fahrzeug im Stillstand gegen Wegrollen sichern.

Während bei früheren Kraftfahrzeugen Betriebsbremse und Feststellbremse typischerweise getrennt voneinander betrachtet und implementiert wurden, da sie unterschiedliche Aufgaben erfüllen, wird bei neueren Entwicklungen zunehmend eine Integration beider Bremssysteme angestrebt, um zusätzliche oder bessere Funktionalitäten erreichen zu können. Hierzu sind jedoch auch höhere Anforderungen an die Betriebssicherheit zu stellen.

US 2016032995 A1 zeigt eine Stromhaltesteuerung, welche einen Widerstand bzw. einen Ruck in der Bewegung des Fahrzeugs beim Lösen der Bremse reduziert. Durch den ruckfreien bzw. ruckreduzierten Lösebetrieb wird ein unkomfortables Gefühl der Passagiere vermieden.

Es ist deshalb eine Aufgabe der Erfindung, ein Bremssystem für ein Kraftfahrzeug bereitzustellen, welches im Vergleich zum Stand der Technik alternativ, beispielsweise mit einer höheren Betriebssicherheit, ausgeführt ist.

Dies wird erfindungsgemäß durch ein Bremssystem nach Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft ein Bremssystem für ein Kraftfahrzeug, welches eine Anzahl von Rädern aufweist. Das Bremssystem weist eine hydraulische Bremsanordnung auf, welche dazu ausgebildet ist, auf eine erste Gruppe der Räder zu wirken. Das Bremssystem weist eine elektrische Bremsanordnung auf, welche dazu ausgebildet ist, auf eine zweite Gruppe der Räder zu wirken. Das Bremssystem weist ferner eine erste Steuerungsanordnung auf, welche zur Steuerung der hydraulischen Bremsanordnung konfiguriert ist. Außerdem weist das Bremssystem eine zweite Steuerungsanordnung auf, welche zur Steuerung der elektrischen Bremsanordnung konfiguriert ist. Das Bremssystem weist ferner eine Energieversorgungsanordnung auf, welche dazu konfiguriert ist, die erste Steuerungsanordnung und die zweite Steuerungsanordnung separat voneinander mit elektrischer Energie zu versorgen.

Erfindungsgemäß sind die erste Steuerungsanordnung und die zweite Steuerungsanordnung dazu konfiguriert, bei fehlerfreier Funktion der ersten Steuerungsanordnung und der hydraulischen Bremsanordnung eine Verstärkung einer Fahrerbremsanforderung mittels der hydraulischen Bremsanordnung vorzunehmen, und bei vollständigem oder teilweisem Ausfall der ersten Steuerungsanordnung und/oder der hydraulischen Bremsanordnung eine Verstärkung einer Fahrerbremsanforderung mittels der elektrischen Bremsanordnung vorzunehmen.

Dies erlaubt bei einem einwandfreien Betrieb einer Betriebsbremse bzw. einer anderen hydraulischen Bremsanordnung eine normale Bremsung ansprechend auf einen Fahrerbremswunsch, wobei dieser Fahrerbremswunsch unterstützt werden kann. Beispielsweise kann ein von einem Fahrer in einem Bremszylinder erzeugter Druck an Räder weitergeleitet werden, und es kann zusätzlich mittels einer Pumpe, eines Linearaktuators oder einer anderen elektrisch betriebenen Einrichtung eine Verstärkung vorgenommen werden.

Tritt jedoch ein vollständiger oder teilweiser Ausfall der hierfür notwendigen Komponenten auf, so kann eine Verstärkung einer Fahrerbremsanforderung mittels der elektrischen Bremsanordnung erfolgen. Beispielsweise kann ein von einem Fahrer in einem Hauptbremszylinder erzeugter Druck an die Räder weitergeleitet werden, wobei die elektrische Bremsanordnung ein zusätzliches Bremsmoment erzeugt. Dies erlaubt eine deutlich höhere Sicherheit, da auch für einen vollständigen oder teilweisen Ausfall des hydraulischen Bremssystems bzw. dessen elektrischer Komponenten eine Unterstützung bei der Umsetzung eines Fahrerbremswunsches erfolgt.

Die Anzahl der Räder entspricht dabei einer Mehrzahl. Insbesondere bevorzugt entspricht die Anzahl der Räder der Zahl vier, so dass das Kraftfahrzeug vier Räder aufweist.

Mittels des erfindungsgemäßen Bremssystems kann eine erhöhte Ausfallsicherheit erreicht werden. Dies liegt insbesondere daran, dass die Bremsanordnungen separate Steuerungsanordnungen haben und diese zusätzlich separat voneinander mit elektrischer Energie versorgt werden können.

Die erste Gruppe der Räder kann insbesondere alle Räder umfassen. Dies entspricht einer typischen Ausführung von Kraftfahrzeugen, wobei alle Räder gebremst werden.

Typischerweise umfasst die zweite Gruppe nur einen Teil der Räder, beispielsweise die Hinterräder eines Kraftfahrzeugs. Jedoch kann die zweite Gruppe auch einen anderen Teil der Räder, beispielsweise auch alle Räder, umfassen.

Eine Konfiguration der Energieversorgungsanordnung zur separaten Energieversorgung der beiden Steuerungsanordnungen kann beispielsweise durch separate Leitungen oder sonstige separate Komponenten erfolgen. Insbesondere können die Systeme ganz oder teilweise redundant ausgeführt sein. Dadurch wird die Ausfallsicherheit erheblich erhöht.

Gemäß einer bevorzugten Ausführung ist die elektrische Bremsanordnung eine Parkbremse. Beispielsweise kann diese auf die Hinterräder eines Fahrzeugs wirken. Gemäß einer bevorzugten Ausführung ist die hydraulische Bremsanordnung eine Betriebsbremse. Diese kann beispielsweise auf alle Räder wirken.

Beispielsweise kann eine Parkbremse insbesondere dafür ausgebildet sein, ein Fahrzeug im Stillstand ruhend zu halten und gegen unbeabsichtigte Bewegung zu sichern. Eine Betriebsbremse dient hingegen typischerweise einer Verzögerung eines fahrenden Fahrzeugs. Die Funktionalitäten der unterschiedlichen Bremsanordnungen können jedoch auch kombiniert werden.

Bevorzugt weist die hydraulische Bremsanordnung zur Druckerzeugung sowohl einen fahrerbetätigten Bremszylinder wie auch einen elektrisch betätigten Aktuator auf. Dadurch können zwei Möglichkeiten zur Erzeugung von hydraulischem Druck kombiniert werden, wobei sowohl eine unmittelbare Fahrerbetätigung wie auch eine indirekte oder rein elektronisch veranlasste Betätigung über einen elektrisch betätigten Aktuator möglich ist. Insbesondere kann eine hydraulische Rückfallebene vorgesehen sein, in welcher ein fahrerbetätigter Bremszylinder Druck erzeugt, welcher unmittelbar auf die Räder wirkt. Dies erlaubt es, ein Fahrzeug auch dann noch zum Stillstand zu bringen, wenn alle elektrischen Systeme ausgefallen sind.

Bevorzugt weist die Energieversorgungsanordnung einen Wechselrichter, eine Batterie und/oder einen Kondensator als Mittel zum Bezug und/oder zum Speichern der elektrischen Energie auf. Dies dient insbesondere der Sicherstellung einer Eingangsenergie für die Energieversorgung, welche dann an die Steuerungsanordnungen weitergegeben werden kann. Ein Wechselrichter kann beispielsweise Wechselstrom erzeugen, welcher beispielsweise gleichgerichtet werden kann. Beispielsweise kann hierfür eine Lichtmaschine verwendet werden. Eine Batterie kann elektrische Energie beispielsweise für den Fall eines Überlastzustands oder eines Ausfalls einer Lichtmaschine sowie für den Zeitraum eines Stillstands speichern. Ein Kondensator kann insbesondere zur Überbrückung kurzfristiger Schwankungen eingesetzt werden.

Die Energieversorgungsanordnung ist bevorzugt dazu ausgebildet, selektiv die erste Steuerungsanordnung und/oder die zweite Steuerungsanordnung mit einem oder mehreren Mitteln zum Bezug und/oder zum Speichern der elektrischen Energie zu verbinden. Dadurch kann sichergestellt werden, dass die beiden Steuerungsanordnungen in bestmöglicher Weise mit Energie versorgt werden. Bei solchen Mitteln kann es sich beispielsweise um die eben erwähnten Komponenten Wechselrichter, Lichtmaschine, Batterie oder Kondensator handeln.

Die erste Steuerungsanordnung ist bevorzugt dazu konfiguriert, eine oder mehrere der folgenden Funktionen auszuführen:
- Erfassen und/oder Verarbeiten einer Fahrerbremsanforderung,
- Kommunikation über einen CAN-Bus,
- Kommunikation mit einem Fahrzeugnetzwerk,
- Verarbeitung von Signalen aus Raddrehzahlsensoren,
- Versorgung der hydraulischen Bremsanordnung mit hydraulischer Energie,
- Berechnung und/oder Ausführen von Bremsregelfunktionen, Antiblockiersystem (ABS), elektrischer Bremskraftverteilung (EBD) und/oder elektronischem Stabilitätsprogramm (ESP),
- Ermittlung einer Fahreranforderung über einen Parkbremsschalter, über eine Mensch-Maschine-Schnittstelle und/oder über ein Fahrzeugnetzwerk.

Derartige Funktionen dienen typischerweise der Steuerung eines hydraulischen Bremssystems. Es sei verstanden, dass alle möglichen Kombinationen und Unterkombinationen der genannten Funktionalitäten möglich sind. Auch ist eine Kombination mit anderen Funktionen möglich.

Die zweite Steuerungsanordnung ist bevorzugt dazu konfiguriert, eine oder mehrere der folgenden Funktionen auszuführen:
- Erfassen und/oder Verarbeiten einer Fahrerbremsanforderung,
- Erfassen und/oder Verarbeiten einer Stillstandsinformation,
- Bildung von Ersatzsignalen zur Stillstandserkennung mit Informationen aus einem Fahrzeugnetzwerk, von einer Kamera, einem Radar, einem Getriebe und/oder einem Motor,
- Erfassen und/oder Verarbeiten einer Radschlupfinformation,
- Erfassen und/oder Verarbeiten einer Stellung eines elektrischen Parkbremsschalters,
- Versorgung der elektrischen Bremsanordnung mit elektrischer Energie.

Dies sind typische Funktionalitäten einer Steuerung einer Parkbremse. Es sei verstanden, dass alle möglichen Kombinationen und Unterkombinationen der genannten Funktionalitäten möglich sind. Auch ist eine Kombination mit anderen Funktionen möglich.

Insbesondere kann die zweite Steuerungsanordnung dazu konfiguriert sein, einen Fahrzeugstillstand zu erkennen, beispielsweise mittels Raddrehzahlsensoren oder Kamerasignalen, und bei erkanntem Fahrzeugstillstand ansprechend auf einen aktivierten Parkbremsschalter eine Parkbremse anzuziehen.

Durch die weiter oben beschriebene Ausführung mit zwei separaten Steuerungsanordnungen und separater Energieversorgung wird die Zuverlässigkeit zusätzlich erhöht.

Die erste Steuerungsanordnung weist bevorzugt eine oder mehrere der folgenden Komponenten auf:
- eine Leistungssteuerungseinheit (PCU = Power Control Unit), welche konfiguriert ist zur Spannungsversorgung interner Elektronik, zum Einlesen von Raddrehzahlinformationen und/oder zum Ansteuern von Ventilen und/oder eines hydraulischen Stellers und/oder eines Aktuators,
- eine Ausführungseinheit für Software zur Regelung der hydraulischen Bremsanordnung.

Bevorzugt weist die zweite Steuerungsanordnung eine oder mehrere der folgenden Komponenten auf:
- einen Mikrocontroller, welcher konfiguriert ist zur Spannungsversorgung interner Elektronik und/oder zum Einlesen von Raddrehzahlinformationen,
- eine Ausführungseinheit für Software zur Regelung der elektrischen Bremsanordnung,
- eine Parkbremsansteuerungseinheit, welche konfiguriert ist zum Ansteuern einer H-Brücke,
- eine H-Brücke.

Bei den erwähnten Aufzählungen von Komponenten sei darauf hingewiesen, dass diese in beliebiger Kombination oder Unterkombination miteinander kombiniert werden können. Auch eine Kombination mit anderen Elementen ist möglich.

Bevorzugt sind Bauteile der ersten Steuerungsanordnung baulich und/oder elektrisch getrennt von Bauteilen der zweiten Steuerungsanordnung. Dadurch wird die Zuverlässigkeit weiter erhöht, da beispielsweise Fehlerzustände, welche bei einer Steuerungsanordnung auftreten, nicht zwingend auf die andere Steuerungsanordnung überschlagen. Beispielsweise kann somit die Auswirkung von Überspannungszuständen begrenzt werden. Beispielsweise können separate Platinen oder Gehäuse verwendet werden.

Bevorzugt ist das Bremssystem dazu konfiguriert, bei einem vollständigen oder teilweisen Ausfall der ersten Steuerungsanordnung eine Fehlermeldung auszugeben und/oder einen Betrieb der elektrischen Bremsanordnung, welcher ansprechend auf einen erkannten Ausfall der ersten Steuerungsanordnung erfolgt, nur für einen vorbestimmten Zeitraum oder bis zu einem vordefinierten Ereignis zuzulassen. Ein solches vordefiniertes Ereignis kann beispielsweise ein Fahrzeugstillstand oder ein Werkstattaufenthalt sein. Dadurch wird der Gefahr entgegengewirkt, dass ein Fahrer selbst bei einem vollständigen oder teilweisen Ausfall der hydraulischen Bremsanordnung sich auf die Zusatzwirkung der elektrischen Bremsanordnung verlässt und eine Reparatur hinausschiebt oder zu vermeiden versucht. Beispielsweise kann durch die beschriebenen Maßnahmen ein Fahrer dazu aufgefordert und angehalten werden, eine Werkstatt aufzusuchen, um die defekten Komponenten instand setzen zu lassen.

Bevorzugt ist die elektrische Bremsanordnung zur unmittelbaren elektrischen Bremsung der Räder ausgebildet. Dies kann insbesondere bedeuten, dass keine hydraulische Zwischenkomponente vorgesehen ist. Insbesondere kann eine von einem Elektromotor, einem Elektromagneten oder einer anderen elektrischen Vorrichtung betriebene Komponente unmittelbar zur Bremskrafterzeugung wirken.

Bevorzugt ist das Bremssystem für ein Kraftfahrzeug mit vier Rädern ausgebildet, nämlich mit zwei Vorderrädern und zwei Hinterrädern, wobei die erste Gruppe alle vier Räder umfasst, und wobei die zweite Gruppe die Hinterräder umfasst. Dies entspricht einer typischen Konfiguration von Bremssystemen in einem normalen Personenkraftwagen. Es sei jedoch erwähnt, dass das erfindungsgemäße Bremssystem auch in anderen Fahrzeugen mit unterschiedlichen Radanzahlen oder unterschiedlicher Aufteilung der ersten Gruppe und der zweiten Gruppe problemlos verwendet werden kann.

Weitere Merkmale und Vorteile wird der Fachmann dem nachfolgend mit Bezug auf die beigefügte Zeichnung beschriebenen Ausführungsbeispiel entnehmen. Dabei zeigen:
Fig. 1: ein Bremssystem, und
Fig. 2: einen Schaltplan von Komponenten eines Bremssystems.

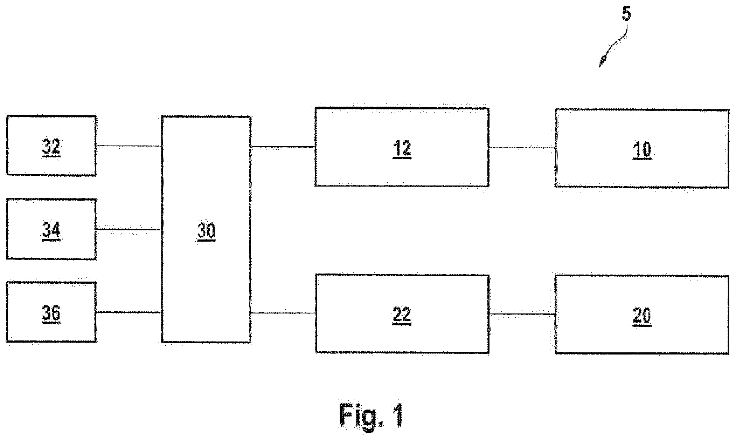

Fig. 1 zeigt ein Bremssystem 5 gemäß einem Ausführungsbeispiel der Erfindung in einer rein schematischen Darstellung. Das Bremssystem 5 weist eine hydraulische Bremsanordnung 10 mit einer zugehörigen ersten Steuerungsanordnung 12 auf. Das Bremssystem 5 weist eine elektrische Bremsanordnung 20 mit einer zugehörigen zweiten Steuerungsanordnung 22 auf. Die erste Steuerungsanordnung 12 ist dazu konfiguriert, die hydraulische Bremsanordnung 10 zu steuern und mit Energie zu versorgen. Die zweite Steuerungsanordnung 22 ist dazu konfiguriert, die elektrische Bremsanordnung 20 zu steuern und mit Energie zu versorgen.

Zur gemeinsamen Energieversorgung ist eine Energieversorgungsanordnung 30 vorgesehen. Diese weist einen Wechselrichter in Form einer Lichtmaschine 32, eine Batterie 34 und einen Kondensator 36 auf.

Die Energieversorgungsanordnung 30 ist dazu ausgebildet, die erste Steuerungsanordnung 12 und die zweite Steuerungsanordnung 22 selektiv mit jeder der Komponenten Lichtmaschine 32, Batterie 34 und Kondensator 36 zu verbinden. Dadurch können die beiden Steuerungsanordnungen 12, 22 und somit auch die beiden Bremsanordnungen 10, 20 separat voneinander mit elektrischer Energie versorgt werden.

Bei normaler Funktion aller Komponenten, insbesondere derjenigen der ersten Steuerungsanordnung 12 und des hydraulischen Bremssystems 10, wird ein Fahrerbremswunsch erfasst, welcher vom Fahrer insbesondere durch die Betätigung eines Bremspedals ausgelöst werden kann. Der Fahrerbremswunsch kann dann elektrisch verstärkt werden, beispielsweise mittels eines nicht dargestellten Linearaktuators.

Fallen jedoch die hierfür notwendigen Komponenten aus, so kann die zweite Steuerungsanordnung 22 das elektrische Bremssystem 20 dazu einsetzen, eine Unterstützung des Fahrerbremswunsches zu bewirken. Ansonsten dient das elektrische Bremssystem 20 hauptsächlich als Parkbremse.

Typische Fahrzeuge sind derzeit mindestens so ausgelegt, dass sie im Fehlerfall, also bei Ausfall der kompletten Fahrzeugelektrik, eine Verzögerung von 2,44 m/s² bei einem Fahrerdruck von 500 N durchführen können. Typischerweise ist es jedoch wünschenswert, eine Verzögerung von beispielsweise 4 m/s² oder 4,88 m/s² bei einer Bremskraft von 200 N zu erreichen.

Um die Verzögerung zu erhöhen und/oder den dafür notwendigen Fahrerbremsdruck zu reduzieren, ist typischerweise eine elektrische Erfassung und Verstärkung des Fahrerbremsdrucks mithilfe einer Energiequelle erforderlich.

In einem Regelbetrieb wird bei normaler Funktion der Komponenten typischerweise mittels einer hydraulischen Bremsanordnung ein Fahrerbremswunsch umgesetzt und verstärkt. Fällt diese Verstärkung jedoch aus, kann bei derzeit benutzten Ausführungen typischerweise nur noch eine Verzögerung von etwa 2,5 m/s² bis 4 m/s² bei 500 N garantiert werden.

Durch die hierin beschriebene Ausführung eines Bremssystems kann eine Redundanz der Fahrerverstärkung durch Erzeugung einer Unabhängigkeit zwischen der Erzeugung eines Bremsmoments durch einen hydraulischen und einen elektrischen Aktuator (typischerweise eine Parkbremse) gewährleistet werden. Diese Unabhängigkeit findet sich nicht nur im Aktuator selbst, sondern kann sich beispielsweise zusätzlich auf die folgenden Aspekte beziehen:
- Spannungsversorgung,
- Sensorinformation (Sensorik),
- Auswertung (Logik),
- Ausführung (Aktorik).

Die hierin beschriebene Ausführung eines Bremssystems 5 gewährleistet, dass eine Umsetzung eines Fahrerbremswunsches bei einem Großteil der bekannten Einzelfehler über eine hydraulische oder elektrische Verstärkung erfolgt. Diese Verstärkung kann beispielsweise an der Hinterachse vorgesehen sein.

Die in Fig. 1 beschriebenen Komponenten können insbesondere mittels eines Fahrzeugbusses, beispielsweise eines CAN-Busses, miteinander kommunizieren. Ein solches Bussystem ist zur Vereinfachung nicht dargestellt.

Die erste Steuerungsanordnung 12 und die hydraulische Bremsanordnung 10 können auch als erster Pfad des Bremssystems 5 betrachtet werden. Die zweite Steuerungsanordnung 22 und die elektrische Bremsanordnung 20 können dementsprechend als zweiter Pfad des Bremssystems 5 betrachtet werden. Die beiden Pfade sind dabei bevorzugt zueinander redundant ausgeführt.

Der erste Pfad erhält dabei typischerweise folgende Aufgaben:
- Erfassung eines Fahrerbremswunsches,
- Herstellen einer Kommunikation zum Fahrzeugnetzwerk,
- Einlesen der Raddrehzahlfühlerinformationen,
- Versorgung des Bremssystems mit hydraulischer Energie ("Bremsdruck"),
- Berechnung der dazugehörigen Bremsregelfunktionen wie beispielsweise ABS, EBD oder ESP (auch als AYC bezeichnet) .

Der zweite Pfad erhält typischerweise folgende Aufgaben:
- Erfassung des Fahrerbremswunsches,
- Erfassen des Fahrzeugstatus in Bezug auf Stillstand,
- Erfassen des Fahrzeugstatus in Bezug auf Radschlupf,
- Einlesen des Parkbremsschalters,
- Versorgung der Parkbrems-Aktuatoren mit elektrischer Energie zur Erzeugung eines Bremsmoments mithilfe dieser.

Der erste Pfad repräsentiert dabei typischerweise die Befähigung einer elektronischen Steuerungseinheit (ECU = Electronic Control Unit), über die Hydraulik ein Bremsmoment zu erzeugen. Der zweite Pfad repräsentiert typischerweise die Befähigung zur Erzeugung eines Bremsmoments über einen Parkbrems-Aktuator.

Über jeweils einen dieser Pfade oder auch beide Pfade wird die Verstärkung des Fahrerbremswunsches realisiert. Solange der erste Pfad verfügbar ist, erfolgt typischerweise aus Komfortgründen die Verstärkung über die Hydraulik. Im Falle eines Ausfalls oder einer nicht akzeptablen Degradierung kann diese Verstärkung vom zweiten Pfad durchgeführt werden. Auch eine Kombination ist möglich.

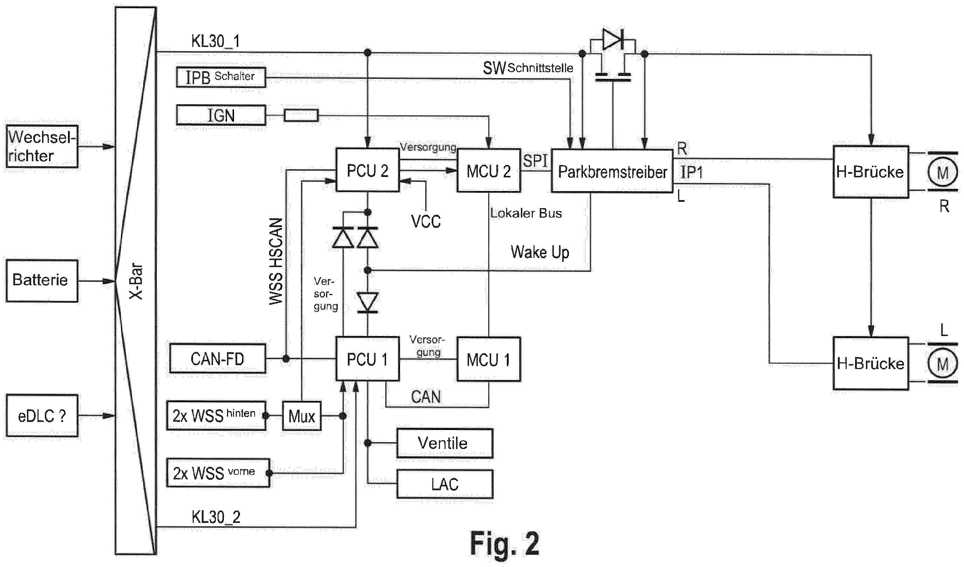

Fig. 2 zeigt einen Schaltplan mit einem möglichen Redundanzkonzept in Bezug auf Sensoren, Verarbeitung und Aktuatoren.

Die linke Seite bis zur X-Bar sorgt dabei für eine Erzeugung einer zueinander redundanten Spannung KL30_1 und KL30_2.

Diese kann folgendermaßen ausgeprägt sein:
- Absicherung der Unabhängigkeit zwischen KL30_1 und KL30_2 durch klare Trennung der Eingangsspannungen,
- Umschaltfähigkeit der X-Bar, um die Eingangsspannung je nach Zustand auf KL30_1 und/oder KL30_2 zu schalten.

Die Ausführungspfade bestehen vorliegend aus folgenden Bausteinen:
Erster Pfad ("Hydraulik"):
- PCU 1:
   - Spannungsversorgung der internen Elektronik,
   - Einlesen der Raddrehzahlinformationen,
   - Ansteuerung der Ventile ("valve") und des hydraulischen Stellers ("LAC"),
- MCU 1:
   - Ausführungseinheit für die Software des hydraulischen Bremsregelsystems (CPU).

Zweiter Pfad ("Parkbremse"):
- PCU 2:
   - Als Spannungsversorgung der internen Elektronik,
   - Einlesen der hinteren Raddrehzahlinformationen,
- MCU 2:
   - Ausführungseinheit für die Software der Parkbremsen-Ansteuerung (CPU),
- Parkbremstreiber:
   - Ansteuerung der H-Brücke zum Betrieb des Parkbremsaktuators,
- H-Bridge:
   - Steuerung des Stroms aufgrund von Ansteuerbefehlen durch den IPEX.

Alternativ können in den jeweiligen Pfaden die Bauteile in anderer Art und Weise kombiniert werden, solange die Unabhängigkeit dieser zu den Bauteilen im anderen Pfad gewährleistet ist.

Nachfolgend wird eine Funktion des gezeigten Systems beschrieben, welches beispielsweise eine Redundanz gewährleisten kann:
1. Im fehlerfreien Fall wird der Radschlupf im ersten Pfad direkt über die Raddrehzahlinformationen ermittelt. Fällt dieser Kommunikationspfad aus, so werden über eine Umschaltung innerhalb des Steuergeräts (MUX) die hinteren Raddrehzahlsignale auf den zweiten Pfad umgeschaltet. Mithilfe dieser Umschaltung kann der zweite Pfad eigenständig den Radschlupf regeln.
2. Fällt die Quelle selbst aus, so ist ein fahrerverstärkter Betrieb über den ersten Pfad möglich. Die Bremskraftverteilung kann über ein statisches EBD mit fester Kennkurve so eingestellt werden, dass eine sichere Fahrerverstärkung möglich ist, ohne dass es zu einem frühzeitigen Schlupf an der Hinterachse kommt (korrekte Blockierreihenfolge).
3. Die Signale der Raddrehzahlfühler bzw. das Signal des Fahrerwunsches wird über den internen Bus an den zweiten Pfad gesendet, so dass die dort befindliche Parkbremsensoftware das statische Lösen oder Setzen der Parkbremse nur im sicheren Zustand erlaubt.
4. Im Steuergerät befinden sich zwei unabhängige Sensoren, um den Fahrerbremswunsch festzustellen (im Regelfall ein Drucksensor und ein Positionssensor). Im Regelfalle sind beide Sensoren an den hydraulischen ersten Pfad angeschlossen, um eine schnelle Reaktion auf den Fahrerwunsch zu ermöglichen. Im Fehlerfalle wird einer der Sensoren über einen Umschaltmechanismus an den zweiten Pfad geleitet. Dieser kann genutzt werden, um den Fahrerwunsch einzulesen, auszuwerten und ein Regeln des Bremsmoments durch den elektrischen Parkbremsaktuator zu ermöglichen.
5. Das System wird über Überwachungsmechanismen die Funktion der Ventile, hydraulischen Steller und der Parkbremsaktuatoren überprüfen. Ist hier ein Redundanzverlust aufgetreten, so ist der Fahrer zu warnen. Außerdem wird über den anderen Pfad die Verstärkung des Bremswunsches gewährleistet.
6. Befindet sich der Fahrer bereits in einer hydraulischen Bremsung und wird über existierende Druck- und/oder Volumenüberwachungen ein Verlust der Verstärkungsbefähigung detektiert, so wird der Fahrer informiert und der zweite Pfad wird aktiviert.
7. Um das Aufwachen des Systems durch einen Parkbremsschalter zu gewährleisten, wird dem zweiten Pfad über eine Wake-up-Leitung die Möglichkeit gegeben, den ersten Pfad aufzuwecken.
8. Ist die Befähigung der Stillstandserkennung über die Raddrehzahlfühler verloren gegangen, so kann sowohl der erste Pfad als auch der zweite Pfad über eine CAN-Kommunikation eine Stillstandsinformation aus anderen Sensoren des Fahrzeugs feststellen. Dies kann zum Beispiel eine Kamera, ein Radar oder auch ein Getriebe sein.

Die erwähnten Komponenten und Vorgehensweisen sind lediglich beispielhaft. Sie können vollständig wie erwähnt oder auch einzeln oder in beliebiger Kombination implementiert werden.

Eine elektrische Verstärkung einer Bremsanforderung kann insbesondere so eingestellt werden, dass die vom Fahrer gewünschte Verzögerung erreicht wird. Zu Beginn eines vom Fahrer ausgelösten Bremsvorgangs findet typischerweise eine rein hydraulische Bremsung ohne Verstärkung statt. Ab einem bestimmten Wert wird die elektrische Parkbremse so geregelt, dass ein definiertes Bremsmoment erzeugt und damit das Fahrzeug zusätzlich verzögert wird.

Nach einer gewissen Zeit, wie zum Beispiel Zündungswechsel, kann die elektrische Verstärkung deaktiviert oder reduziert werden. Dies kann sinnvoll sein, wenn die Verstärkung durch die elektrische Parkbremse nicht zu einem solchen Komfortverlust führt, dass der Fahrer oder Eigentümer des Fahrzeugs eine Reparatur einleitet, da er auch mit den Eigenschaften der degradierten Funktion zufrieden ist. Dies würde bei längerfristigem Betrieb zu einem Sicherheitsrisiko und zu einem erhöhten Verschleiß führen. Deshalb sollte der Fahrer dazu angehalten werden, die defekten Komponenten instand setzen zu lassen.

## Patentansprüche

1. Bremssystem (5) für ein Kraftfahrzeug, welches eine Anzahl von Rädern aufweist, wobei das Bremssystem (5) folgendes aufweist:
- eine hydraulische Bremsanordnung (10), welche dazu ausgebildet ist, auf eine erste Gruppe der Räder zu wirken,
- eine elektrische Bremsanordnung (20), welche dazu ausgebildet ist, auf eine zweite Gruppe der Räder zu wirken,
- eine erste Steuerungsanordnung (12), welche zur Steuerung der hydraulischen Bremsanordnung (10) konfiguriert ist,
- eine zweite Steuerungsanordnung (22), welche zur Steuerung der elektrischen Bremsanordnung (20) konfiguriert ist, und
- eine Energieversorgungsanordnung (30), welche dazu konfiguriert ist, die erste Steuerungsanordnung (12) und die zweite Steuerungsanordnung (22) separat voneinander mit elektrischer Energie zu versorgen, **dadurch gekennzeichnet, dass** die erste Steuerungsanordnung (12) und die zweite Steuerungsanordnung (22) dazu konfiguriert sind, bei fehlerfreier Funktion der ersten Steuerungsanordnung (12) und der hydraulischen Bremsanordnung (10) eine Verstärkung einer Fahrerbremsanforderung mittels der hydraulischen Bremsanordnung (10) vorzunehmen, und bei vollständigem oder teilweisem Ausfall der ersten Steuerungsanordnung (12) und/oder der hydraulischen Bremsanordnung (10) eine Verstärkung einer Fahrerbremsanforderung mittels der elektrischen Bremsanordnung (20) vorzunehmen.

2. Bremssystem (5) nach Anspruch 1,
- wobei die elektrische Bremsanordnung (20) eine Parkbremse ist.

3. Bremssystem (5) nach einem der vorhergehenden Ansprüche,
- wobei die hydraulische Bremsanordnung (10) eine Betriebsbremse ist.

4. Bremssystem (5) nach einem der vorhergehenden Ansprüche,
- wobei die hydraulische Bremsanordnung (10) zur Druckerzeugung sowohl einen fahrerbetätigten Bremszylinder wie auch einen elektrisch betätigten Aktuator aufweist.

5. Bremssystem (5) nach einem der vorhergehenden Ansprüche,
- wobei die Energieversorgungsanordnung (30) einen Wechselrichter (32), eine Batterie (34) und/oder einen Kondensator (36) als Mittel zum Bezug und/oder zum Speichern der elektrischen Energie aufweist.

6. Bremssystem (5) nach einem der vorhergehenden Ansprüche,
- wobei die Energieversorgungsanordnung (30) dazu ausgebildet ist, selektiv die erste Steuerungsanordnung (12) und/oder die zweite Steuerungsanordnung (22) mit einem oder mehreren Mitteln zum Bezug und/oder zum Speichern der elektrischen Energie zu verbinden.

7. Bremssystem (5) nach einem der vorhergehenden Ansprüche,
- wobei die erste Steuerungsanordnung (12) zu einer oder mehreren der folgenden Funktionen konfiguriert ist:
- Erfassen und/oder Verarbeiten einer Fahrerbremsanforderung,
- Kommunikation über einen CAN-Bus,
- Kommunikation mit einem Fahrzeugnetzwerk,
- Verarbeitung von Signalen aus Raddrehzahlsensoren,
- Versorgung der hydraulischen Bremsanordnung (10) mit hydraulischer Energie,
- Berechnung und/oder Ausführen von Bremsregelfunktionen, Antiblockiersystem (ABS), elektronische Bremskraftverteilung (EBD) und/oder elektronisches Stabilitätsprogramm (ESP),
- Ermittlung einer Fahreranforderung über einen Parkbremsschalter, über eine Mensch-Maschine-Schnittstelle und/oder über ein Fahrzeugnetzwerk.

8. Bremssystem (5) nach einem der vorhergehenden Ansprüche,
- wobei die zweite Steuerungsanordnung (22) zu einer oder mehreren der folgenden Funktionen konfiguriert ist:
- Erfassen und/oder Verarbeiten einer Fahrerbremsanforderung,
- Erfassen und/oder Verarbeiten einer Stillstandsinformation,
- Bildung von Ersatzsignalen zur Stillstandserkennung mit Informationen aus einem Fahrzeugnetzwerk, von einer Kamera, einem Radar, einem Getriebe und/oder einem Motor,
- Erfassen und/oder Verarbeiten einer Radschlupfinformation,
- Erfassen und/oder Verarbeiten einer Stellung eines elektrischen Parkbremsschalters,
- Versorgung der elektrischen Bremsanordnung (20) mit elektrischer Energie.

9. Bremssystem (5) nach einem der vorhergehenden Ansprüche,
- wobei die erste Steuerungsanordnung (12) eine oder mehrere der folgenden Komponenten aufweist:
- eine Leistungssteuerungseinheit (PCU), welche konfiguriert ist zur Spannungsversorgung interner Elektronik, zum Einlesen von Raddrehzahlinformation, und/oder zur Ansteuerung von Ventilen und/oder eines hydraulischen Stellers und/oder eines Aktuators,
- eine Ausführungseinheit für Software zur Regelung der hydraulischen Bremsanordnung (10).

10. Bremssystem (5) nach einem der vorhergehenden Ansprüche,
- wobei die zweite Steuerungsanordnung (22) eine oder mehrere der folgenden Komponenten aufweist:
- einen Mikrocontroller, welche konfiguriert ist zur Spannungsversorgung interner Elektronik und/oder zum Einlesen von Raddrehzahlinformationen,
- eine Ausführungseinheit für Software zur Regelung der elektrischen Bremsanordnung (20),
- eine Parkbremsenansteuerungseinheit, welche konfiguriert ist zum Ansteuern einer H-Brücke,
- eine H-Brücke.

11. Bremssystem (5) nach einem der vorhergehenden Ansprüche,
- wobei Bauteile der ersten Steuerungsanordnung (12) baulich und/oder elektrisch getrennt sind von Bauteilen der zweiten Steuerungsanordnung (22).

12. Bremssystem (5) nach einem der vorhergehenden Ansprüche,
- welches dazu konfiguriert ist, bei einem vollständigen oder teilweisen Ausfall der ersten Steuerungsanordnung (12) eine Fehlermeldung auszugeben und/oder einen Betrieb der elektrischen Bremsanordnung (20), welcher ansprechend auf einen erkannten Ausfall der ersten Steuerungsanordnung (12) erfolgt, nur für einen vorbestimmten Zeitraum oder bis zu einem vordefinierten Ereignis zuzulassen.

13. Bremssystem (5) nach einem der vorhergehenden Ansprüche,
- wobei die elektrische Bremsanordnung (20) zur unmittelbaren elektrischen Bremsung der Räder ausgebildet ist.

14. Bremssystem (5) nach einem der vorhergehenden Ansprüche,
- wobei das Bremssystem (5) für ein Kraftfahrzeug mit vier Rädern ausgebildet ist, nämlich mit zwei Vorderrädern und zwei Hinterrädern,
- wobei die erste Gruppe alle vier Räder umfasst, und
- wobei die zweite Gruppe die Hinterräder umfasst.

## Claims

1. Brake system (5) for a motor vehicle which has a number of wheels, wherein the brake system (5) has the following:
- a hydraulic brake arrangement (10) which is designed to act on a first group of the wheels,
- an electric brake arrangement (20) which is designed to act on a second group of the wheels,
- a first control arrangement (12) which is configured to control the hydraulic brake arrangement (10),
- a second control arrangement (22) which is configured to control the electric brake arrangement (20), and
- an energy supply arrangement (30) which is configured to supply electrical energy to the first control arrangement (12) and the second control arrangement (22) separately from one another, **characterized in that** the first control arrangement (12) and the second control arrangement (22) are configured to boost a driver braking demand by means of the hydraulic brake arrangement (10) if the first control arrangement (12) and the hydraulic brake arrangement (10) are functioning correctly, and to boost a driver braking demand by means of the electric brake arrangement (20) in the event of complete or partial failure of the first control arrangement (12) and/or of the hydraulic brake arrangement (10).

2. Brake system (5) according to Claim 1,
- wherein the electric brake arrangement (20) is a parking brake.

3. Brake system (5) according to either of the preceding claims,
- wherein the hydraulic brake arrangement (10) is a service brake.

4. Brake system (5) according to any of the preceding claims,
- wherein the hydraulic brake arrangement (10) has, for the purposes of generating pressure, both a driver-operated brake cylinder and an electrically operated actuator.

5. Brake system (5) according to any of the preceding claims,
- wherein the energy supply arrangement (30) has an inverter (32), a battery (34) and/or a capacitor (36) as a means for drawing and/or storing the electrical energy.

6. Brake system (5) according to any of the preceding claims,
- wherein the energy supply arrangement (30) is designed to selectively connect the first control arrangement (12) and/or the second control arrangement (22) to one or more means for drawing and/or storing the electrical energy.

7. Brake system (5) according to any of the preceding claims,
- wherein the first control arrangement (12) is configured for one or more of the following functions:
- detection and/or processing of a driver braking demand,
- communication via a CAN bus,
- communication with a vehicle network,
- processing of signals from wheel rotational speed sensors,
- supply of hydraulic energy to the hydraulic brake arrangement (10),
- calculation and/or execution of brake control functions, anti-lock brake system (ABS), electronic brake force distribution (EBD) and/or electronic stability program (ESP),
- ascertainment of a driver demand via a parking brake switch, via a human-machine interface and/or via a vehicle network.

8. Brake system (5) according to any of the preceding claims,
- wherein the second control arrangement (22) is configured for one or more of the following functions:
- detection and/or processing of a driver braking demand,
- detection and/or processing of standstill information,
- generation of substitute signals for standstill detection with information from a vehicle network, from a camera, a radar, a transmission and/or a motor,
- detection and/or processing of wheel slip information,
- detection and/or processing of a position of an electric parking brake switch,
- supply of electrical energy to the electric brake arrangement (20).

9. Brake system (5) according to any of the preceding claims,
- wherein the first control arrangement (12) has one or more of the following components:
- a power control unit (PCU), which is configured to supply voltage to internal electronics, to read in wheel rotational speed information and/or to control valves and/or a hydraulic actuating means and/or an actuator,
- an execution unit for software for the closed-loop control of the hydraulic brake arrangement (10).

10. Brake system (5) according to any of the preceding claims,
- wherein the second control arrangement (22) has one or more of the following components:
- a microcontroller which is configured to supply voltage to internal electronics and/or to read in wheel rotational speed information,
- an execution unit for software for the closed-loop control of the electric brake arrangement (20),
- a parking brake control unit which is configured to control an H-bridge,
- an H-bridge.

11. Brake system (5) according to any of the preceding claims,
- wherein components of the first control arrangement (12) are structurally and/or electrically separate from components of the second control arrangement (22).

12. Brake system (5) according to any of the preceding claims,
- which is configured to, in the event of a complete or partial failure of the first control arrangement (12), output a fault message and/or allow operation of the electric brake arrangement (20), which occurs in response to an identified failure of the first control arrangement (12), only for a predetermined period of time or until a predefined event.

13. Brake system (5) according to any of the preceding claims,
- wherein the electric brake arrangement (20) is designed for direct electric braking of the wheels.

14. Brake system (5) according to any of the preceding claims,
- wherein the brake system (5) is designed for a motor vehicle with four wheels, namely with two front wheels and two rear wheels,
- wherein the first group comprises all four wheels, and
- wherein the second group comprises the rear wheels.

## Revendications

1. Système de freinage (5) pour un véhicule automobile qui présente un nombre de roues, le système de freinage (5) présentant :
- un dispositif de freinage hydraulique (10) qui est réalisé pour agir sur un premier groupe des roues,
- un dispositif de freinage électrique (20) qui est réalisé pour agir sur un deuxième groupe des roues,
- un premier dispositif de commande (12) qui est configuré pour commander le dispositif de freinage hydraulique (10),
- un deuxième dispositif de commande (22) qui est configuré pour commander le dispositif de freinage électrique (20), et
- un dispositif d'alimentation en énergie (30) qui est configuré pour alimenter séparément le premier dispositif de commande (12) et le deuxième dispositif de commande (22) en énergie,
**caractérisé en ce que**, lorsque le premier dispositif de commande (12) et le dispositif de freinage hydraulique (10) fonctionnent sans défaut, le premier dispositif de commande (12) et le deuxième dispositif de commande (22) sont configurés pour procéder à une amplification d'une demande de freinage du conducteur au moyen du dispositif de freinage hydraulique (10), et en cas de défaillance totale ou partielle du premier dispositif de commande (12) et/ou du dispositif de freinage hydraulique (10), pour procéder à une amplification d'une demande de freinage du conducteur au moyen du dispositif de freinage électrique (20).

2. Système de freinage (5) selon la revendication 1,
- dans lequel le dispositif de freinage électrique (20) est un frein de stationnement.

3. Système de freinage (5) selon l'une quelconque des revendications précédentes,
- dans lequel le dispositif de freinage hydraulique (10) est un frein de service.

4. Système de freinage (5) selon l'une quelconque des revendications précédentes,
- dans lequel le dispositif de freinage hydraulique (10) présente à la fois un cylindre de frein actionné par le conducteur et un actionneur à commande électrique pour la génération de pression.

5. Système de freinage (5) selon l'une quelconque des revendications précédentes,
- dans lequel le dispositif d'alimentation en énergie (30) présente un onduleur (32), une batterie (34) et/ou un condensateur (36) comme moyens d'obtention et/ou de stockage de l'énergie électrique.

6. Système de freinage (5) selon l'une quelconque des revendications précédentes,
- dans lequel le dispositif d'alimentation en énergie (30) est conçu pour relier sélectivement le premier dispositif de commande (12) et/ou le deuxième dispositif de commande (22) à un ou plusieurs moyens d'obtention et/ou de stockage de l'énergie électrique.

7. Système de freinage (5) selon l'une quelconque des revendications précédentes,
- dans lequel le premier dispositif de commande (12) est configuré pour une ou plusieurs des fonctions suivantes :
- détecter et/ou traiter une demande de freinage du conducteur,
- communiquer par un bus CAN,
- communiquer avec un réseau de véhicule,
- traiter des signaux provenant de capteurs de vitesse de rotation de roue,
- alimenter le dispositif de freinage hydraulique (10) en énergie hydraulique,
- calculer et/ou exécuter des fonctions de régulation de freinage, de système antiblocage (ABS), de répartition de force de freinage électronique (EBD) et/ou de programme de stabilité électronique (ESP),
- établir une demande du conducteur par l'intermédiaire d'un commutateur de frein de stationnement, d'une interface homme/machine et/ou d'un réseau de véhicule.

8. Système de freinage (5) selon l'une quelconque des revendications précédentes,
- dans lequel le deuxième dispositif de commande (22) est configuré pour une ou plusieurs des fonctions suivantes :
- détecter et/ou traiter une demande de freinage du conducteur,
- détecter et/ou traiter une information d'immobilisation,
- former des signaux de remplacement pour l'identification d'immobilisation avec des informations provenant d'un réseau de véhicule d'une caméra, d'un radar, d'une transmission et/ou d'un moteur,
- détecter et/ou traiter une information de patinage des roues,
- détecter et/ou traiter une position d'un commutateur de frein de stationnement électrique,
- alimenter le dispositif de freinage électrique (20) en énergie électrique.

9. Système de freinage (5) selon l'une quelconque des revendications précédentes,
- dans lequel le premier dispositif de commande (12) présente un ou plusieurs des composants suivants :
- une unité de commande de puissance (PCU) qui est configurée pour l'alimentation en tension de l'électronique interne, pour lire des informations de vitesse de rotation des roues et/ou pour piloter des soupapes et/ou un dispositif de réglage hydraulique et/ou un actionneur,
- une unité d'exécution destinée à un logiciel de régulation du dispositif de freinage hydraulique (10).

10. Système de freinage (5) selon l'une quelconque des revendications précédentes,
- dans lequel le deuxième dispositif de commande (22) présente un ou plusieurs des composants suivants :
- un microcontrôleur qui est configuré pour l'alimentation en tension de l'électronique interne et/ou pour lire des informations de vitesse de rotation des roues,
- une unité d'exécution destinée à un logiciel de régulation du dispositif de freinage électrique (20),
- une unité de pilotage de frein de stationnement qui est configurée pour piloter un pont en H,
- un pont en H.

11. Système de freinage (5) selon l'une quelconque des revendications précédentes,
- dans lequel des composants du premier dispositif de commande (12) sont séparés de manière structurelle et/ou électrique des composants du deuxième dispositif de commande (22).

12. Système de freinage (5) selon l'une quelconque des revendications précédentes,
- qui est configuré, en cas de défaillance totale ou partielle du premier dispositif de commande (12), pour émettre un message d'erreur et/ou pour autoriser un fonctionnement du dispositif de freinage électrique (20) qui a lieu en réponse à une défaillance identifiée du premier dispositif de commande (12) uniquement pendant une période prédéterminée ou bien jusqu'à un événement prédéfini.

13. Système de freinage (5) selon l'une quelconque des revendications précédentes,
- dans lequel le dispositif de freinage électrique (20) est réalisé pour le freinage électrique direct des roues.

14. Système de freinage (5) selon l'une quelconque des revendications précédentes,
- dans lequel le système de freinage (5) est réalisé pour un véhicule automobile à quatre roues, notamment à deux roues avant et deux roues arrière,
- le premier groupe comprenant l'ensemble des quatre roues, et
- le deuxième groupe comprenant les roues arrière.
